# FASCICULE DE BREVET EUROPEEN

(11) **EP 0 779 870 B1**
(45) Date de publication et mention de la délivrance du brevet: **06.05.1998**
(21) Numéro de dépôt: 95927788.0
(22) Date de dépôt: 17.08.1995
(51) Int. Cl.: B60T 13/573, B60T 13/575

(54) **SERVOMOTEUR PNEUMATIQUE D'ASSISTANCE AU FREINAGE**
PNEUMATISCHER BREMSKRAFTVERSTÄRKER
PNEUMATIC BRAKE SERVO

(30) Priorité: 08.09.1994 FR 9410732
(43) Date de publication de la demande: 25.06.1997
(73) Titulaire: Bosch Systemes de Freinage, 93700 Drancy (FR)
(72) Inventeur: GAUTIER, Jean-Pierre, F-93600 Aunlay-sous-Bois (FR); VERBO, Ulysse, F-93600 Aulnay-sous-Bos (FR); PEREZ REVILLA, Miguel, F-95100 Argenteuil (FR)
(74) Mandataire: Bentz, Jean-Paul
(86) Numéro de dépôt international: FR9501086
(87) Numéro de publication internationale: WO9607574

(56) Documents cités:
- DE-A- 3 740 691
- DE-A- 4 227 879

## Description

La présente invention concerne les servomoteurs pneumatiques, du type de ceux qui sont utilisés pour fournir une assistance au freinage des véhicules automobiles.

De tels servomoteurs sont bien connus et couramment employés dans la technique automobile. Ils comportent une enveloppe fixée sur le tablier séparant le compartiment moteur de l'habitacle, de façon à pouvoir être actionnés par une pédale de frein située dans l'habitacle et à actionner le piston primaire d'un maître-cylindre situé dans le compartiment moteur et relié par un circuit hydraulique aux freins du véhicule.

Dans le but d'optimiser le fonctionnement de ces servomoteurs, et également la sensation ressentie par le conducteur lorsqu'il appuie sur la pédale de frein, on a cherché depuis longtemps à diminuer ce qu'on appelle l'effort d'attaque, c'est à dire la force nécessaire pour actionner le servomoteur.

Or, on constate qu'il existe une limite physique inférieure au dessous de laquelle cet effort d'attaque ne peut descendre. En effet, après avoir été actionné, un servomoteur restitue un certain effort, appelé effort de retour, lorsqu'il reprend sa position de repos. On conçoit aisément que l'effort d'attaque ne peut être inférieur à l'effort de retour.

On connaît par exemple du document WO 94/04403 un servomoteur correspondant au préambule de la revendication principale, dans lequel l'effort d'attaque est réduit en prévoyant des moyens pour faire agir sur la face arrière de l'élément d'obturation constituant la valve à trois voies d'un servomoteur la pression régnant dans la chambre arrière du servomoteur.

Ce servomoteur connu comporte une enveloppe possédant un axe de symétrie, séparée de façon étanche par une structure de paroi mobile en une chambre avant reliée en permanence à une source de basse pression, et une chambre arrière reliée sélectivement à la chambre avant ou à une source de haute pression par un moyen de valve à trois voies actionnée par une tige de commande susceptible de s'appuyer, par l'intermédiaire de la face avant d'un plongeur, sur la face arrière d'une tige de poussée, le plongeur coulissant dans un alésage de la paroi mobile, la valve à trois voies comportant un élément de clapet disposé dans une partie arrière tubulaire de la paroi mobile et coopérant par une face avant annulaire avec un premier siège annulaire de clapet formé sur le plongeur et avec un second siège annulaire de clapet formé sur la paroi mobile, le premier siège de clapet étant concentrique au second siège de clapet et de diamètre inférieur, la face avant annulaire de l'élément de clapet étant mobile dans la partie arrière tubulaire de la paroi mobile et étant étanche dans cette dernière par son bord extérieur et par son bord intérieur, la face avant annulaire du clapet comportant au moins une ouverture faisant communiquer une chambre située derrière la face avant annulaire du clapet avec l'espace situé entre les premier et second sièges de clapet.

Une telle disposition permet de répartir les différences de pressions sur les divers éléments composant la valve à trois voies, et ainsi de réduire les contraintes au repos et en position de travail des différents ressorts de rappel utilisés pour le fonctionnement de la valve à trois voies. Il s'ensuit que l'effort d'attaque, nécessaire pour comprimer dans un premier temps ces ressorts, peut être diminue.

Cependant, ce servomoteur connu présente encore un effort d'attaque assez important au vu des exigences actuelles des constructeurs d'automobiles, effort qu'il convient donc de diminuer.

La présente invention a donc pour but de proposer un servomoteur dont l'effort d'attaque soit le plus réduit possible, et elle propose dans ce but d'en réduire encore l'effort de retour.

Dans ce but, selon la présente invention, la résultante des forces engendrées par la basse pression et par la haute pression s'exerçant sur le plongeur est en permanence nulle ou négligeable.

D'autres buts, caractéristiques et avantages de la présente invention ressortiront plus clairement de la description qui suit d'un exemple de réalisation donné à titre illustratif, en référence aux dessins annexés sur lesquels:

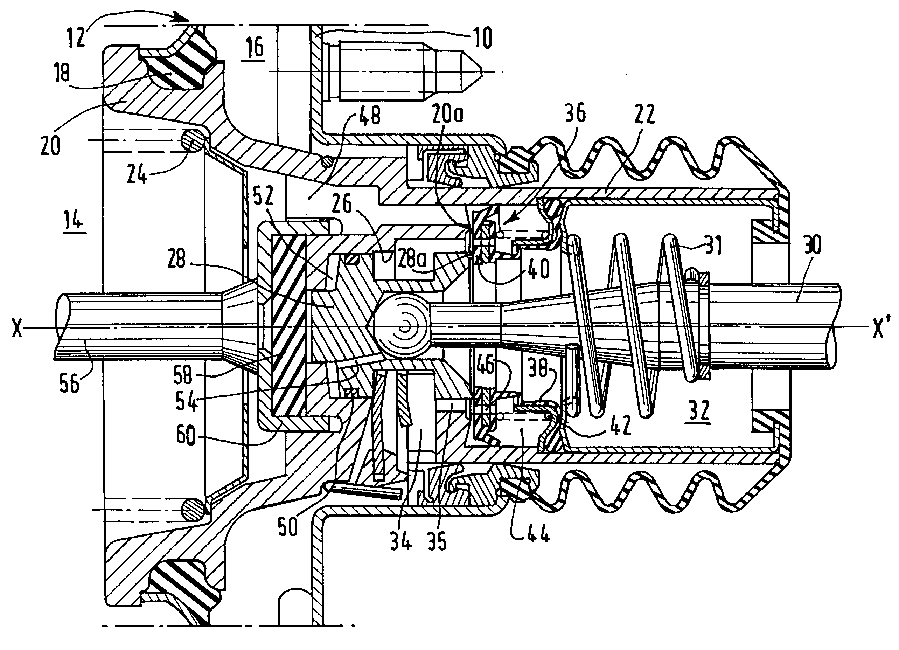

La Figure unique est une vue de côté, en coupe longitudinale, représentant la partie centrale arrière d'un servomoteur pneumatique d'assistance au freinage, réalisé conformément à la présente invention.

La Figure représente la partie centrale arrière d'un servomoteur pneumatique d'assistance au freinage prévu pour être placé de façon habituelle entre la pédale de frein d'un véhicule et le maître-cylindre commandant le circuit de freinage hydraulique de ce véhicule. Par convention, on appelle "avant" du servomoteur la partie de ce dernier tournée vers le maître-cylindre et "arrière" du servomoteur la partie tournée vers la pédale de frein. Sur la Figure, l'avant est ainsi à gauche et l'arrière à droite.

Le servomoteur représenté comprend un enveloppe extérieure 10 en forme de coquille, présentant une symétrie de révolution autour d'un axe X-X'. Seule la partie centrale arrière de cette enveloppe 10 est représentée sur la Figure.

Une structure de paroi mobile 12 délimite à l'intérieur de l'enveloppe 10 une chambre avant 14 et une chambre arrière 16. La paroi mobile 12 est associée à une membrane déroulante souple en élastomère dont le bord périphérique intérieur est reçu de façon étanche grâce à un bourrelet 18 dans un piston creux d'assistance 20 disposé selon l'axe X-X' du servomoteur, et dont le bord périphérique extérieur (non représenté) est fixé de façon étanche sur l'enveloppe extérieure 10.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant (non représentée) de l'enveloppe 10 maintient normalement le piston 20 dans la position arrière de repos illustrée sur la Figure, dans laquelle la chambre arrière 16 présente son volume minimal et la chambre avant 14 son volume maximal.

Dans la partie centrale de la paroi mobile située en avant de la partie tubulaire arrière 22, le piston 20 présente un alésage 26 dans lequel est reçu en coulissement un plongeur 28. L'extrémité avant d'une tige de commande 30 du servomoteur, disposée également selon l'axe X-X', est montée rotulante dans un alésage borgne du plongeur 28.

L'extrémité arrière (non représentée) de la tige de commande 30, qui fait saillie à l'extérieur de la partie tubulaire 22, est commandée directement par la pédale de frein du véhicule (non représentée), et est rappelée dans sa position de repos par un ressort de rappel 31.

L'espace annulaire 32 autour de la tige de commande 30 peut communiquer avec la chambre arrière 16 au travers d'un passage radial 34 formé dans la partie centrale du piston 20, lorsque des moyens d'assistance commandés par le plongeur 28 sont actionnés.

De façon connue par exemple par le document précité, ces moyens d'assistance comprennent une valve à trois voies comportant un clapet annulaire 36 et deux sièges de clapet annulaires concentriques 20a et 28a formés respectivement à l'arrière de la partie centrale du piston 20 et à l'arrière du plongeur 28, le siège 28a étant de diamètre inférieur à celui du siège 20a, un espace 35 étant ménagé entre ces deux sièges et communiquant avec le passage radial 34.

Le clapet 36 est de forme générale tubulaire, et présente une partie arrière 38 fixée de façon étanche dans la partie tubulaire 22 et une face avant annulaire 40 mobile suivant l'axe X-X', cette face avant étant sollicitée vers l'avant par un ressort 42.

La face avant annulaire 40 est raccordée à la partie arrière 38 par son bord périphérique intérieur, et elle coulisse de façon étanche à l'intérieur de la partie tubulaire 22 par son bord périphérique extérieur, de sorte qu'elle définit avec la partie arrière 38 une chambre 44.

La face avant annulaire comporte des ouvertures 46 faisant communiquer cette chambre 44 avec l'espace 35 situé entre les sièges de clapet 20a et 28a.

Conformément à la présente invention, le plongeur 28 est monté à coulissement étanche dans l'alésage 26 grâce à un joint 50 disposé dans une gorge périphérique du plongeur et coopérant avec la paroi de l'alésage 26, comme on l'a représenté, ou qui pourrait en variante être reçu dans une gorge de l'alésage 26 et coopérer avec la surface extérieure du plongeur.

Le joint 50 délimite ainsi en avant du plongeur 28, dans l'alésage 26, un volume 52, qui communique en permanence avec l'espace annulaire 32 grâce à un perçage sensiblement axial 54.

Lorsque l'ensemble du servomoteur est en position de repos, la tige de commande 30 ainsi que le plongeur 28 sont sollicités vers l'arrière, ce dernier étant alors en appui par le siège 28a sur la face 40 et écartant légèrement cette dernière du siège 20a, de sorte que la valve à trois voies établit normalement une communication entre les deux chambres 14 et 16 du servomoteur par l'intermédiaire du passage radial 34 et d'un passage sensiblement axial 48 formé dans la partie centrale du piston 20.

Dans ces conditions, la pression régnant dans la chambre 44 est égale à la basse pression régnant dans la chambre avant 16 du servomoteur, et la face avant 40 du clapet 36 se trouve plaquée contre le siège 28a par la haute pression régnant dans l'espace annulaire 32. Le ressort 42 destiné à solliciter la face avant 40 vers l'avant peut donc n'exercer qu'un effort très faible.

D'autre part, grâce au perçage 54, le volume 52 est en communication avec l'espace annulaire 32, où règne la pression de la source de haute pression. Le plongeur 28 est donc soumis d'une part à la force qu'exerce sur le siège 28a la face avant 40 du clapet 36, et d'autre part à la force engendrée par la pression régnant dans le volume 52 et s'exerçant sur la section du plongeur coulissant dans l'alésage 26.

La présente invention permet de maîtriser parfaitement ces forces, et en particulier permet très simplement de rendre leur résultante nulle en prévoyant que le diamètre de l'alésage 26 soit égal au diamètre du siège 28a. En effet, la haute pression s'exerce alors sur le plongeur 28 sur sa face avant dans le volume 52, c'est à dire sur la surface de la section S de coulissement dans l'alésage 26, et sur sa face arrière sur la surface délimitée par le siège 28a. Ces deux surfaces étant égales, ou très voisines si l'on tient compte des tolérances de fabrication, la résultante des forces engendrées par la basse pression et par la haute pression s'exerçant sur le plongeur est ainsi nulle ou négligeable.

Lorsque le conducteur du véhicule actionne la pédale de frein, il en résulte un mouvement vers l'avant de la tige de commande 30, du plongeur 28 et du clapet 36 dans un premier temps, isole l'une de l'autre les chambres 14 et 16 en fermant le passage de valve 20a-40, puis, dans un deuxième temps, ouvre le passage de valve 28a-40 et permet la communication entre la chambre arrière 16 et l'espace annulaire 32 par l'espace 35 et le passage 34.

Dans cette phase de fonctionnement, la pression dans la chambre arrière 16 du servomoteur augmente, de même que dans la chambre 44, jusqu'à atteindre au maximum la valeur de la haute pression régnant dans l'espace annulaire 32, le servomoteur étant alors dans ce qu'il est convenu d'appeler une phase de saturation.

La pression augmentant dans la chambre arrière 16 du servomoteur crée une différence de pressions sur la paroi mobile 12, engendrant une force d'assistance qui tend à la déplacer vers l'avant, cette force étant transmise à une tige de poussée 56 par une face avant annulaire du piston 20 agissant sur un disque de réaction 58, sur la partie centrale duquel est en appui la face avant du plongeur 28.

Durant cette phase de fonctionnement, la pression à la périphérie du plongeur 28 varie entre la basse pression présente en permanence dans la chambre avant 14 du servomoteur et la haute pression présente dans l'espace annulaire 32. Mais, comme dans la situation précédente, la haute pression s'exerce sur le plongeur 28 sur sa face avant délimitée par la section S de coulissement dans l'alésage 26, et sur sa face arrière sur la surface délimitée par le siège 28a. La résultante des forces engendrées par la haute pression et par la pression variable s'exerçant sur le plongeur est là encore nulle ou négligeable.

On voit d'autre part que le disque de réaction 58 est disposé entre la tige de poussée 56, située dans la chambre avant du servomoteur où règne la basse pression, et le plongeur 28, dont on a vu que la face avant est située dans le volume 52 où régne la haute pression. De façon avantageuse, la présente invention prévoit de réaliser l'étanchéité entre la chambre avant du servomoteur et le volume 52 simplement, à l'aide du disque de réaction 58. Par exemple, le disque de réaction 58 peut être monté à force dans un logement 60 solidaire de la tige de poussée 56.

Lorsque le conducteur du véhicule relâche son effort sur la pédale de freinage, la tige de commande 30 ainsi que la plongeur 28 sont rappelés dans leur position arrière par le ressort de tige 31. le siège 28a du plongeur 28 vient alors en butée contre la face avant 40 du clapet 36 et la fait reculer de façon franche, de sorte que la passage de valve 20a-40 s'ouvre largement. Dans cette phase de fonctionnement, la pression dans la chambre arrière 16 du servomoteur chute brutalement du fait de la communication ainsi établie avec la chambre avant 14.

La pression à la périphérie du plongeur 28 s'abaisse alors jusqu'à la valeur de la basse pression présente en permanence dans la chambre avant 14 du servomoteur. Comme dans les phases de fonctionnement précédentes, la haute pression s'exerce sur le plongeur 28 sur sa face avant délimitée par la section S de coulissement dans l'alésage 26, et sur sa face arrière sur la surface délimitée par le siège 28a. La résultante des forces engendrées par la haute pression et par la pression variable s'exerçant sur le plongeur est là encore nulle ou négligeable.

On comprend donc que, lors de cette phase de retour à la position de repos consécutive à une phase de fonctionnement du servomoteur, le ressort de rappel 31 n'a plus à vaincre, comme dans l'art antérieur tel que représenté par le document précité, une force variable engendrée par la pression variable entourant le plongeur. Il s'ensuit que ce ressort 31 peut avoir une précontrainte au repos beaucoup plus faible, et qu'ainsi l'effort de retour du servomoteur est réduit dans une proportion notable. Il est alors possible de réduire dans la même proprtion l'effort d'attaque du servomoteur pour pouvoir répondre aux exigences actuelles des constructeurs d'automobiles.

## Revendications

1. Servomoteur pneumatique d'assistance au freinage, comportant une enveloppe (10) possédant un axe de symétrie (X-X'), séparée de façon étanche par une structure de paroi mobile (12) en une chambre avant (14) reliée en permanence à une source de basse pression, et une chambre arrière (16) reliée sélectivement à la chambre avant (14) ou à une source de haute pression par un moyen de valve à trois voies (36) actionnée par une tige de commande (30) susceptible de s'appuyer, par l'intermédiaire de la face avant d'un plongeur (28), sur la face arrière d'une tige de poussée (56) solidaire d'un disque de réaction (58), le plongeur coulissant dans un alésage (26) de la paroi mobile (12), la valve à trois voies (36) comportant un élément de clapet (36) disposé dans une partie arrière tubulaire (22) de la paroi mobile (12) et coopérant par une face avant annulaire (40) avec un premier siège annulaire de clapet (28a) formé sur le plongeur (28) et avec un second siège annulaire de clapet (20a) formé sur la paroi mobile (12), le premier siège de clapet (28a) étant concentrique au second siège de clapet (20a) et de diamètre inférieur, la face avant annulaire (40) de l'élément de clapet (36) étant mobile dans la partie arrière tubulaire (22) de la paroi mobile (12) et étant étanche dans cette dernière par son bord extérieur et par son bord intérieur, la face avant annulaire (40) du clapet (36) comportant au moins une ouverture (46) faisant communiquer une chambre (44) située derrière la face avant annulaire (40) du clapet (36) avec un espace (35) situé entre les premier (28a) et second (20a) sièges de clapet, caractérisé en ce que le plongeur (28) coulisse de façon étanche dans l'alésage (26) de la paroi mobile (12) grâce à un joint d'étanchéité (50) qui délimite dans l'alésage (26) de la paroi mobile (12) un volume (52) dans lequel se déplace la face avant du plongeur (28), la pression régnant dans le volume (52) exerçant sur le plongeur (28) une force telle que la résultante des forces engendrées par la basse pression et par la haute pression s'exerçant sur le plongeur (28) est en permanence nulle ou négligeable.

2. Servomoteur pneumatique selon la revendication 1, caractérisé en ce que le volume (53) dans lequel se déplace la face avant du plongeur (28) communique avec la source de haute pression par un perçage axial (54) pratiqué dans le plongeur (28).

3. Servomoteur pneumatique selon la revendication 2, caractérisé en ce que le diamètre de l'alésage (26) de la paroi mobile (12) est égal au diamètre du premier siège de clapet (28a) formé sur le plongeur (28).

4. Servomoteur pneumatique selon la revendication 3, caractérisé en ce que le disque de réaction (58) réalise l'étanchéité entre la chambre avant (14) du servomoteur et le volume (52) dans lequel se déplace la face avant du plongeur (28).

## Claims

1. Pneumatic brake booster including a casing (10) having an axis of symmetry (X-X') divided in leaktight fashion by a movable wall structure (12) into a front chamber (14) permanently connected to a source of low pressure, and a rear chamber (16) connected selectively to the front chamber (14) or to a source of high pressure by a three-way valve means (36) actuated by a control rod (30) capable of pressing, via the front face of a plunger (28), on the rear face of a push rod (56) secured to a reaction disc (58), the plunger sliding in a bore (26) of the movable wall (12), the three-way valve (36) including a valve element (36) located in a tubular rear part (22) of the movable wall (12) and interacting via an annular front face (40) with a first annular valve seat (28a) formed on the plunger (28) and with a second annular valve seat (20a) formed on the movable wall (12), the first valve seat (28a) being concentric with the second valve seat (20a) and of smaller diameter, the annular front face (40) of the valve element (36) being able to move in the tubular rear part (22) of the movable wall (12) and being sealed in the latter via its outer edge and via its inner edge, the annular front face (40) of the valve (36) including at least one opening (46) causing a chamber (44) situated behind the annular front face (40) of the valve (36) to communicate with a space (35) situated between the first valve seat (28a) and second valve seat (20a), characterized in that the plunger (28) slides in a leaktight fashion inside the bore (26) of the movable wall (12) by virtue of a seal (50) which within the bore (26) of the movable wall (12) delimits a volume (52) in which the front face of the plunger (28) moves, the pressure prevailing in the volume (52) exerting on the plunger (28) a force such that the resultant of the forces generated by the low pressure and by the high pressure exerted on the plunger (28) is permanently zero or negligible.

2. Pneumatic booster according to Claim 1, characterized in that the volume (53) in which the front face of the plunger (28) moves communicates with the source of high pressure through an axial drilling (54) made in the plunger (28).

3. Pneumatic booster according to Claim 2, characterized in that the diameter of the bore (26) in the movable wall (12) is equal to the diameter of the first valve seat (28a) formed on the plunger (28).

4. Pneumatic booster according to Claim 3, characterized in that the reaction disc (58) provides sealing between the front chamber (14) of the booster and the volume (52) in which the front face of the plunger (28) moves.

## Patentansprüche

1. Pneumatischer Bremsunterstützungs-Servomotor mit einem Gehäuse (10), das eine Symmetrieachse (X-X') aufweist und in dichter Weise von einer beweglichen Wandstruktur (12) in eine permanent mit einer Unterdruckquelle verbundene vordere Kammer (14) und eine hintere Kammer (16) unterteilt ist, die selektiv mit der vorderen Kammer (14) oder einer Hochdruckquelle durch ein Dreiwegeventil (36) verbunden ist, das von einer Steuerstange (30) betätigt wird, die sich mittels der vorderen Seite eines Tauchkolbens (28) an der hinteren Seite einer fest mit einer Reaktionsscheibe (58) verbundenen Schubstange (56) abstützen kann, wobei der Tauchkolben in einer Bohrung (26) der beweglichen Wand (12) gleitet, wobei das Dreiwegeventil (36) ein Ventilelement (36) enthält, das in einem rohrförmigen hinteren Abschnitt (22) der beweglichen Wand (12) angeordnet ist und mittels einer ringförmigen Vorderfläche (40) mit einem am Tauchkolben (28) gebildeten ersten ringförmigen Ventilsitz (28a) und mit einem an der beweglichen Wand (12) gebildeten zweiten ringförmigen Ventilsitz (20a) zusammenwirkt, wobei der erste Ventilsitz (28a) konzentrisch mit dem zweiten Ventilsitz (20a) ist und einen kleineren Durchmesser hat, wobei die ringförmige Vorderfläche (40) des Ventilelementes (36) in dem rohrförmigen hinteren Abschnitt (22) der beweglichen Wand (12) bewegbar ist und in diesem mittels seines Außenrandes und seines Innenrandes abdichtet, wobei die ringförmige Vorderfläche (40) des Ventilelementes (36) wenigstens eine Öffnung (46) enthält, die eine hinter der ringförmigen Vorderfläche (40) des Ventilelementes (36) angeordnete Kammer (44) mit einem zwischen dem ersten Ventilsitz (28a) und dem zweiten Ventilsitz (20a) angeordneten Raum (35) verbindet, dadurch gekennzeichnet, daß der Tauchkolben (28) in der Bohrung (26) der beweglichen Wand (12) in dichter Weise mittels einer Dichtung (50) gleitet, die in der Bohrung (26) der beweglichen Wand (12) ein Volumen (52) abgrenzt, in welchem sich die Vorderfläche des Tauchkolbens (28) verstellt, wobei der in diesem Volumen (52) herrschende Druck auf den Tauchkolben (28) eine solche Kraft ausübt, daß die Resultierende der Kräfte, die von den auf den Tauchkolben (28) einwirkenden niedrigen und hohen Drücken erzeugt werden, permanent gleich Null oder vernachlässigbar ist.

2. Pneumatischer Servomotor nach Anspruch 1, dadurch gekennzeichnet, daß das Volumen (53), in welchem sich die Vorderfläche des Tauchkolbens (28) verstellt, mit der Hochdruckquelle über einen in dem Tauchkolben (28) ausgebildeten axialen Durchbruch (54) in Verbindung steht.

3. Pneumatischer Servomotor nach Anspruch 2, dadurch gekennzeichnet, daß der Durchmesser der Bohrung (26) der beweglichen Wand (12) gleich dem Durchmesser des am Tauchkolben (28) gebildeten ersten Ventilsitzes (28a) ist.

4. Pneumatischer Servomotor nach Anspruch 3, dadurch gekennzeichnet, daß die Reaktionsscheibe (58) die Abdichtung zwischen der vorderen Kammer (14) des Servomotors und dem Volumen (52) bewirkt, in welchem sich die Vorderfläche des Tauchkolbens (28) verstellt.
